# EUROPEAN PATENT APPLICATION

(11) **EP 1 477 903 A2**
(43) Date of publication of application: **17.11.2004**
(21) Application number: 03291113.3
(22) Date of filing: 13.05.2003
(51) Int. Cl.: G06F 13/16

(54) **Memory system for a radiotelephone**

(71) Applicant: Motorola Inc., Schaumburg, IL 60196 (US)
(72) Inventor: Gumm, Martin, 01170 Gex (FR); Placido, Giovanni, 1202 Geneve (CH); Schmid, Christophe, Arzier, 1273 Vaud (CH); Mathys, Yves, Bernex, Geneva 1233 (CH); Chatelain, Andre, Versoix, Geneva 1290 (CH)
(74) Representative: Wharmby, Martin Angus

(57) **Abstract**

A memory system for an electronic device comprising a first semiconductor chip having a first circuit; a second semiconductor chip having a second circuit, the second circuit having a controller, wherein the controller is arranged to control access to a memory chip or embedded memory within the second circuit for both the first circuit and the second circuit based upon received memory access requests from the first circuit and the second circuit.

## Description

The present invention relates to a memory system for a radiotelephone.

Third generation radiotelephones typically include a base band modem circuit and an application processor circuit.

The base band modem circuit is arranged to perform all digital channel encoding/decoding related tasks for multiple wireless telecommunication standards at various bit rates. The base band modem circuit receives inputs and sends outputs in digital or analogue form from/to the RF circuit(s), which in turn receives inputs and sends outputs from/to the antenna. For the execution of the required modem functions the modem circuit uses memory for storing data and instructions for the execution of the programs running on a CPU and/or DSP as well as storing data from DMA sources. The memory can be in external devices and/or embedded into the modem circuit.

The application processor circuit is arranged to perform higher level application processing, for example the running of an open operation system or the performing of multimedia functions such as moving and still image processing, audio processing and the like. For performing the required application processor functions the application processor circuit uses memory for storing data and instructions for the execution of the programs running on a CPU and/or DSP as well as storing data from DMA sources. The memory can be in external devices and/or embedded into the application processor circuit.

When the base band circuit and application processor circuit are incorporated onto a single semiconductor chip both circuits typically access, when required, memory on the same external memory chip(s) or internal memory.

However, when the base band circuit and application processor circuit are incorporated onto separate semiconductor chips the memory requirements for each circuit are typically supported by separate external memory chips and/or separate embedded memories. This, however, requires the duplication of external memory chips.

One solution for avoiding the duplication of external memory chips when the base band circuit and application processor circuit are incorporated on separate chips has been the use of a shared memory scheme where the shared memory chips are connected to both the modem and the application processor circuit. The two circuits use a request/acknowledge protocol to arbitrate access to the memory. This, however, can have an adverse impact on the memory access performance for each circuit and can cause limitations on the types of memory devices that can be used and the memory speeds achievable.

It is desirable to improve this situation.

In accordance with a first aspect of the present invention there is provided a memory system for an electronic device comprising a first semiconductor chip having a first circuit; a second semiconductor chip having a second circuit, the second circuit having a controller, wherein the controller is arranged to control access to a memory chip or embedded memory within the second circuit for both the first circuit and the second circuit based upon received memory access requests from the first circuit and the second circuit.

This provides the advantage of allowing a single memory chip to be accessed by two separate circuits on two respective semiconductor chips, where the memory access bandwidth requirements can be determined by the second circuit.

Preferably the first circuit incorporates a memory interface coupled to the second circuit via a bus, such that memory access requests for the first circuit can be communicated to the second circuit via the bus.

Preferably the controller includes first means for determining the sequence of accesses to the memory chip based upon the received memory access requests and second means for controlling the access to the memory chip bases upon the determined sequence of received memory access requests.

Preferably the controller is arranged to interleave memory accesses to the memory chip or embedded memory.

Preferably the controller of the second circuit is arranged to control the memory bandwidth for the first circuit by means of a weighted access arbitration scheme.

Preferably the first circuit is arranged to provide a clock signal to the second circuit when the second circuit is in a low power mode in order to keep all modules within the second circuit active that are required to perform the memory access requests of the first circuit.

Preferably the memory system further comprising a third semiconductor chip having a third circuit, wherein the controller is arranged to control access to a memory chip or embedded memory within the second circuit for the first circuit, the second circuit and the third circuit based upon received memory access requests for the first circuit, the second circuit and the third circuit.

In accordance with a second aspect of the present invention there is provided a method for accessing a memory chip on a radiotelephone comprising receiving a first memory access request from a first circuit on a first semiconductor chip and a second memory access request from a second circuit on a second semiconductor chip by a controller that forms part of the second circuit; controlling access to a memory chip based upon the received first memory access request and the second memory access request.

An embodiment of the invention will now be described, by way of example, with reference to the drawings, of which:
Figure 1 illustrates a radiotelephone incorporating a memory system according to an embodiment of the present invention;
Figure 2 illustrates a state-of-the-art memory interface;
Figure 3 illustrates a memory interface according to an embodiment of the present invention;
Figure 4 illustrates a memory interface according to an embodiment of the present invention;
Figure 5 illustrates a memory interface according to an embodiment of the present invention;
Figure 6 illustrates a component of a memory interface according to an embodiment of the present invention;
Figure 7 illustrates a component of a memory interface according to an embodiment of the present invention;
Figure 8 illustrates a memory system according to an embodiment of the present invention;
Figure 9 illustrates a memory system according to an embodiment of the present invention.

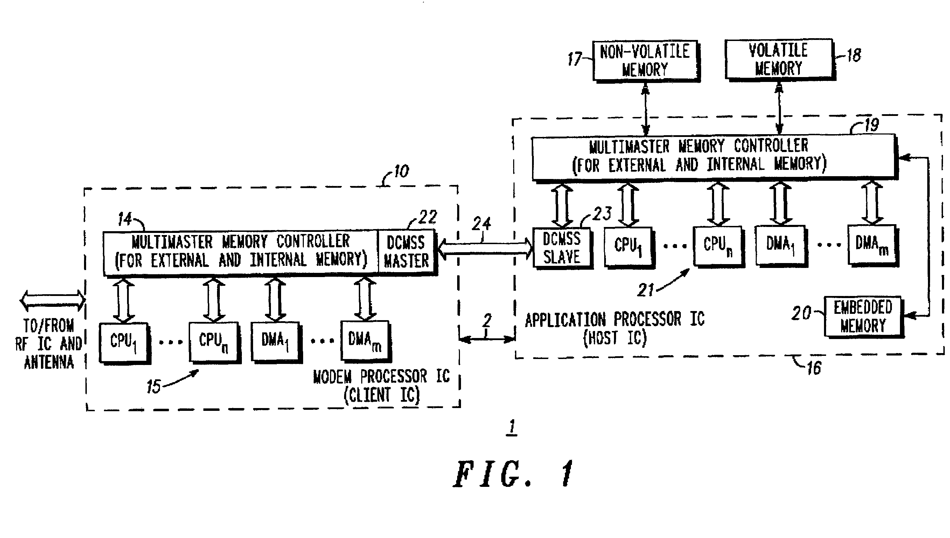

Figure 1 shows a radiotelephone 1 having a modem integrated circuit (IC) 10 formed on a first semiconductor chip and an application processor integrated circuit (IC) 16 formed on a second semiconductor chip. The modem IC 10 includes a memory interface 14 that incorporates a memory master logic 22. Coupled to the memory interface 14 are data using/generating elements 15, which for the purposes of this embodiment have been labelled CPU₁, CPUₙ, DMA₁, DMAₙ, however, other types and numbers of data using/generating elements may be used (i.e. DSP).

The application processor IC 16, as for the modem IC 10, also includes a memory interface 19. The application processor IC memory interface 19 is internally coupled to an embedded memory 20 and externally coupled to a non-volatile memory chip 17 (for example a Flash memory chip) and a volatile memory chip 18 (for example SDRAM memory chip). Also coupled to the memory interface 19 are data using/generating elements 21, which for the purposes of this embodiment have also been labelled CPU₁, CPUₙ, DMA₁, DMAₙ, however, other types and numbers of data using/generating elements may be used (i.e. DSP). Additionally, a memory slave logic 23 is coupled to the memory interface 19, as described below.

The memory master logic 22 on the modem IC 10 is coupled to the memory slave logic 23 on the application processor IC 16 via a bus 24. Additionally, the modem IC 10 and the application processor IC 16 can exchange data via a serial link 2. However, the information carried on the serial link 2 typically includes no more than control information exchanged between the modem IC 10 and the application processor IC 16.

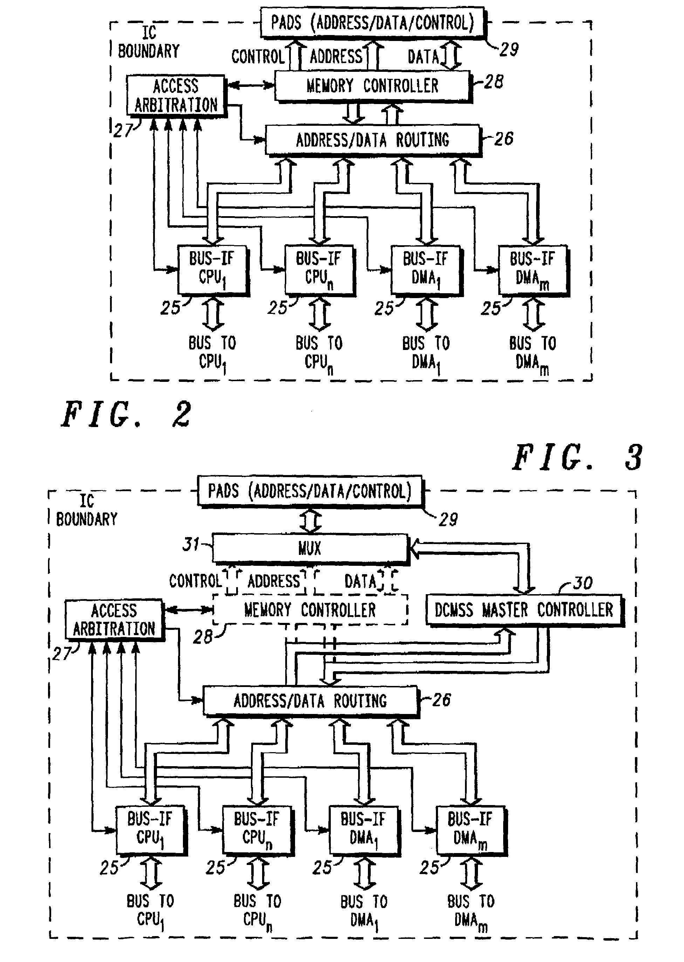

Figure 2 illustrates the memory interface 14, 19 on the modem IC 10 and the application processor 16. The memory interface 14, 19 is connected to a set of electrical pads 29 to allow the coupling of the memory interface 14, 19 to an external device, for example external memory chips.

Various master ports 25, associated with the data using/generating elements 15, 21, are coupled to a memory controller 28 via an address/data multiplexer 26.

The memory controller 28 controls the accesses to memory locations based on the inputs of an arbitration module 27. The arbitration module 27 determines the sequence in which data is either stored or retrieved (i.e. accessed) in/from external memory chips and/or the embedded memory and is coupled to the master ports 25, the address/data multiplexer 26 and the memory controller 28.

Figure 3 shows the memory interface 14 of the modem IC 10 incorporating the memory master logic 22. The memory master logic 22 is coupled to the address/data multiplexer 26 and to electrical pads 29, via a multiplexer 31. In this embodiment the memory controller 28 has been disabled, for example by software. The memory master logic 22 is used by the modem IC 10 to control the flow of data between the modem IC 10 and the application processor IC 16, as described below.

The use of the multiplexer 31 allows the memory controller 28 to be enabled (and the memory master logic 22 disabled) should the memory interface 14 be required to access memory directly.

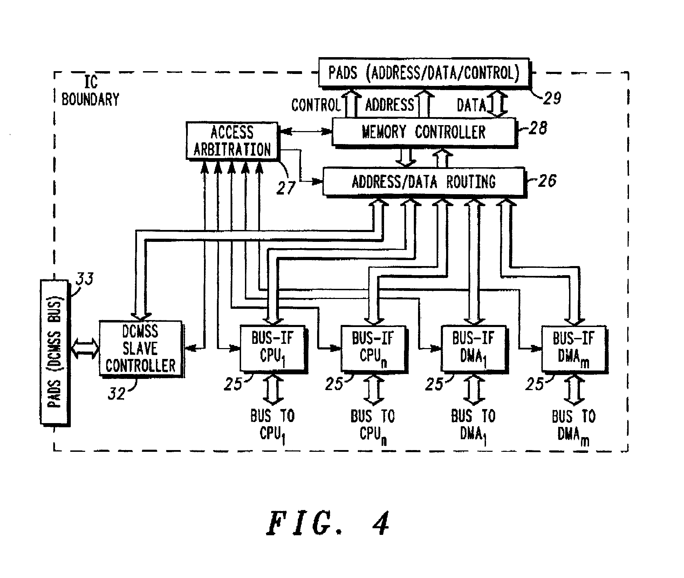

Figure 4 illustrates the application processor IC memory interface 19 incorporating the memory slave logic 23. The memory slave logic 23 is connected to a second set of electrical pads 33. The electrical pads 33 allow the coupling of the memory interface 19 (on the application processor IC 16) to the memory interface 14 included in the modem IC 10 via the bus 24.

Additionally the memory slave logic 23, acting as a master port for the modem IC 10, is coupled like the various master ports 25 to the arbiter 27 and the address/data multiplexer 26. The memory slave logic 23 forwards memory access requests, from the memory master logic 22 on the modem IC 10, to the arbiter 27.

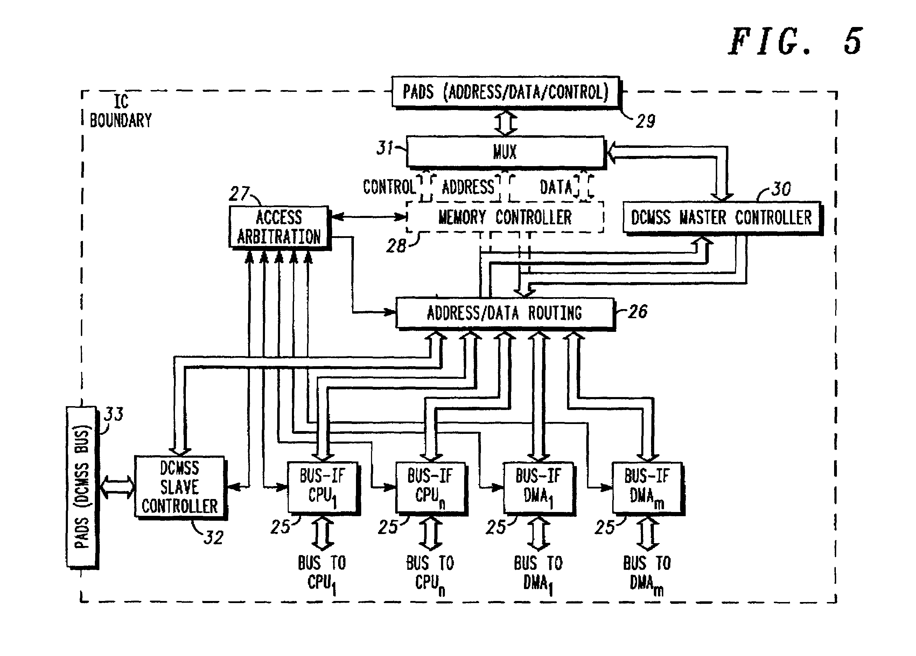

Figure 5 illustrates a universal memory interface incorporating both a memory master logic 22 and memory slave logic 23. Accordingly, the use of a universal memory interface within the modem IC 10 would not require the use of the memory control logic 28, the memory slave logic 23 or the electrical pads 33. Correspondingly, the use of a universal memory interface within the application processor 16 would not require the use of the memory master logic 22. The activation of the appropriate logic components for the respective modem/application processor ICs 10, 16 may be performed by either hardware or software.

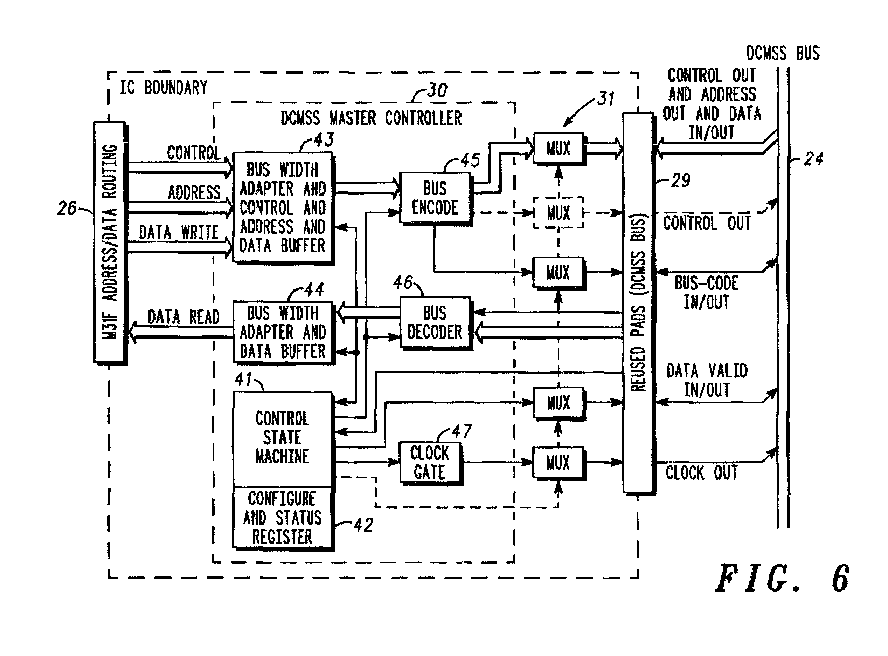

Figure 6 illustrates in more detail the memory master logic 22 that is enabled on the modem memory interface 14, which is used to control the passing of data between the modem IC 10 and the application processor IC 16 for storing and/or retrieving data in/from the external volatile memory chip 17 and/or the non-volatile memory chip 18 and/or the embedded memory 20.

When data is to be passed from the master ports CPU₁, CPUₙ, DMA₁, DMAₙ associated with the modem memory IC 10 the data and associated address and control information is passed to a bus width adapter module 43 within the memory master module 22 via a respective data bus and address bus (which in this embodiment are both 32 bit wide) and via a control bus from the address/data multiplexer 26. The control bus in this embodiment is 8 bit wide and carries information on the type of the transaction, for example read/write access, burst/single access, number of data bytes to be read/written. The bus width adapter module 43 partitions the control, address, and data lines (i.e. 32) according to the width of the bus 24 that couples the modem memory interface 14 to the application processor memory interface 19. For example, if the bus coupling the modem memory interface 14 to the application processor memory interface 19 is 8 bits wide the bus width adapter module 43 will partition the data lines into four (i.e. four sets of eight lines) for outputting on the parallel bus 24. However, any combination of bus sizes could be used. In order to temporary store data the bus width adapter 43 includes a data/address buffer.

Furthermore, data transmitted over the bus 24 can be transmitted using invert bus coding to allow a reduction in line toggling power. The bus coding is performed by the bus encode module 45.

The control, address, and data information is then passed to the multiplexer 31 for outputting on the bus 24 via the electrical pads 29

Correspondingly, on reception of data from the application processor memory interface 19 the data is passed to the bus decode module 46 (that performs the opposite function to that of the bus encode module 45) and then to the bus width adapter module 44 that performs the opposite function to that of the module 43 (i.e. it combines the data lines of the bus 24 to maintain compatibility with the data lines of the modem memory interface 14).

The memory master logic 22 includes a configuration module 42 that control the activation/disabling of the memory master logic 22 and defines the width of bus 24. The configuration module 42 includes status polling. The main purpose of the status polling is to check settings such as bus width between the memory master logic 22 on the modem IC 10 and the memory slave logic 23 on the application processor IC 16, or to check that both the integration circuits 10, 16 are enabled before sending transfer requests and data. Additionally, by setting the configuration module it is possible to choose between an optimised configuration where the address/data lines on bus 24 are multiplexed with the control line and a standard configuration where address/data and control lines are separated.

The memory master logic 22 also includes a control state machine 41. The control state machine 41 controls a clock gate 47 to drive a clock signal on the bus 24. The clock signal is driven during all read/write transactions and, if no further requests are made, is switched off a configurable number of clock cycles after the end of receiving a transaction signal via the control line on the bus 24.

The bus 24 consists of one common control/address/data bus of the width configured in the configuration register 42; a control bus that is used when standard configuration is set as explained above; one bus-code line reporting if the data is invert coded; one data valid line reporting the presence of valid data on the bus and one clock line.

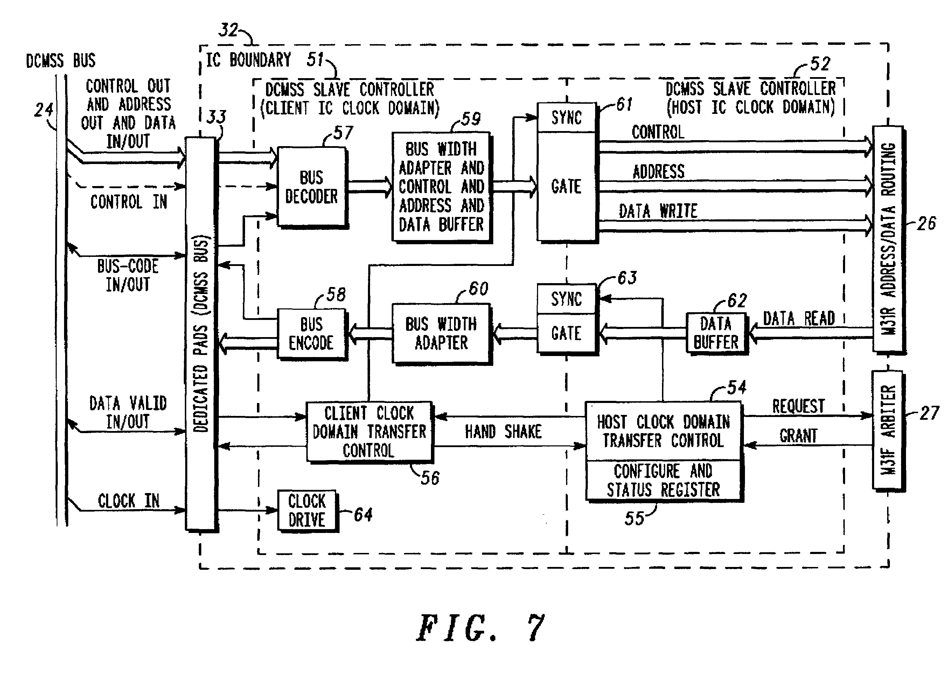

Figure 7 more clearly illustrates the memory slave logic 23 that is enabled on the application processor IC 16, which is used in the passing of data between the modem IC 10 and the external non-volatile memory chip 17 and/or volatile memory chip 18 and/or embedded memory 20.

The memory slave logic 23 has a client clock domain 51 and host clock domain 52.

The client clock domain 51 is synchronised to the clock signal on the memory master logic 22 clock that is formed on the modem memory IC 10. The client clock domain 51 is coupled to the bus 24 from the memory master logic 22 on the modem IC 10 via electrical pads 33. The client clock domain 51 includes a bus width adapter module 59 that incorporates an address and data buffer and a control buffer. The bus width adapter module 59 is coupled to address, data, and control lines from the bus 24 for receiving control, address and data information for storing or retrieving in the external non-volatile memory chip 17 and/or volatile memory chip 18 and/or in the embedded memory 20. On receipt of information, via bus 24, a bus decode module 57 decodes the information as a reverse process to that of the encode module 45. The bus width adapter module 59 parallelizes the information as a reverse process to that of the bus width adapter module 43 of the memory master logic 22 on the modem IC 10. Parallelized data/address information is stored in the data/address buffers, the associated control information is stored in the control buffer.

The client clock domain 51 also includes a second bus width adapter module 60 for serializing parallel data from the application processor memory interface 19 to the memory master logic 22 on the modem IC 10 over the bus 24, where the serialization factor will depend upon the number of the data lines in the application processor memory interface 19 and the number of data lines on the bus 24. A bus encode module 58 encode bus signals before passing them to the bus 24 via the electrical pads 33.

The client clock domain 51 is linked to the host clock domain via a first synchronisation module 61 and a second synchronisation module 63. The first synchronisation module 61 synchronises the data, address, and control information between the client clock domain and the master clock domain. The second synchronisation module 63 synchronises the data information between the master clock domain and the client clock domain.

The host clock domain 52 is coupled to the arbitration module 27 and multiplexer 26, as described above, where the host clock domain 52 acts as another master port for requesting access to the external non-volatile memory chip 17 and/or volatile memory chip 18 and/or to the embedded memory 20. This allows the memory access requests from the modem IC 10 to be treated by the application processor memory interface 19 as if the memory access requests were from an application processor master port CPU₁, CPUₙ, DMA₁, DMAₙ (i.e. in a manner transparent to the application processor), thus allowing the application processor memory interface 19 to interleave between memory access request from the modem IC 10 and application processor IC 16, hence minimising 'dead time' between memory access requests.

The arbitration module 27 uses a weighted Round Robin mechanism to grant the requests coming from the master ports 25 and the memory slave logic 23. The number of slots in the weighted round robin arbitration can be configured in the configuration register 55 within the host clock domain 52. In this way the arbitration latency between memory access requests coming from the ports 25 on the application processor IC 16 and the memory requests coming from the modem IC 10 via the memory master logic 22, the bus 24, and the slave memory logic 23 can be adjusted to the needs of the system.

As with the memory master logic 22 the configuration register 55 in the memory slave logic 23 controls the activation/disabling of the memory slave module 23 and defines the usable width of the bus 24. The configuration module 55 includes a mechanism to respond to status polling initiated by the memory master logic 22 on the modem IC 10. Additionally, by setting the configuration module 53 it is possible to choose between an optimised configuration where the address/data lines on 24 are multiplexed with the control lines and a standard configuration where address/data and control lines are separated.

A Client-Clk Transfer Control module 56 controls all circuits in the client clock domain 51. A Host-Clk Transfer Control module 54 controls all circuits in the host-clock domain 52 and communicates with the arbitration module 27 of the memory interface 19. A hand-shaking protocol between the Client-Clk Transfer Control module 56 and the Host-Clk Transfer Control module 54 assure the proper synchronisation and communication between the clock domains.

The modem IC 10 is arranged to drive signals over the bus 24 independently of the status of the application processor IC 16. If the application processor IC 16 is in sleep mode clock signals coming from the bus 24 is driven directly to clock drivers on the application processor IC 16 which clock the memory interface 19 and the external and internal memories 17,18, 20. After the transfer is completed (end of transfer signal back to the modem IC 10) a transition window of a configurable number of clocks is set, if no new requests are scheduled by the memory master logic 22 during this window the control state-machine 41 shuts down the clock and consequently the application processor IC 16 turns in complete sleep mode again.

The memory shared system as described above can be used for memory sharing between more than two integrated circuit.

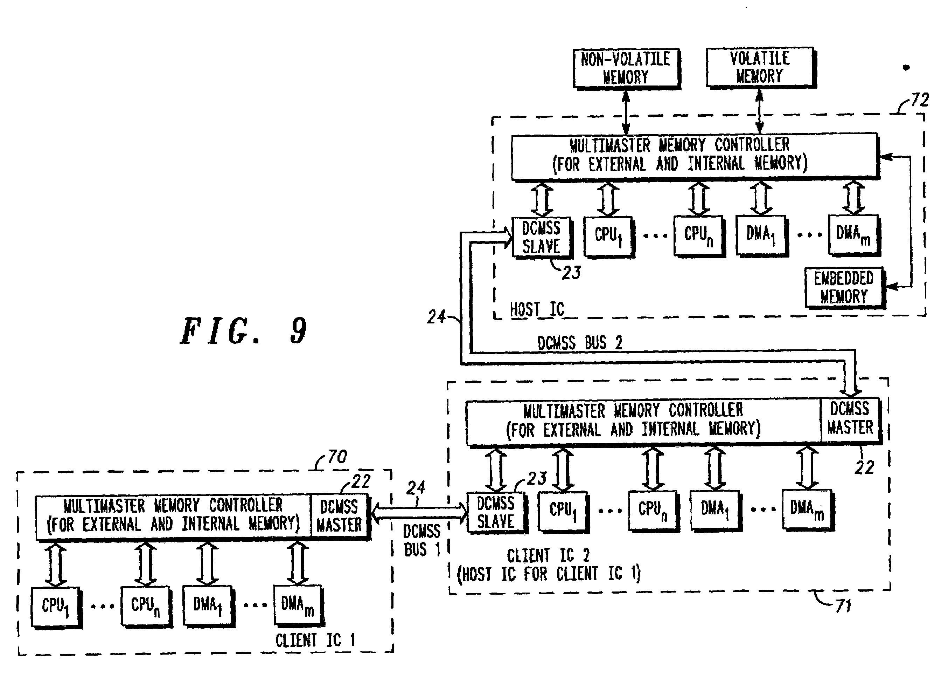

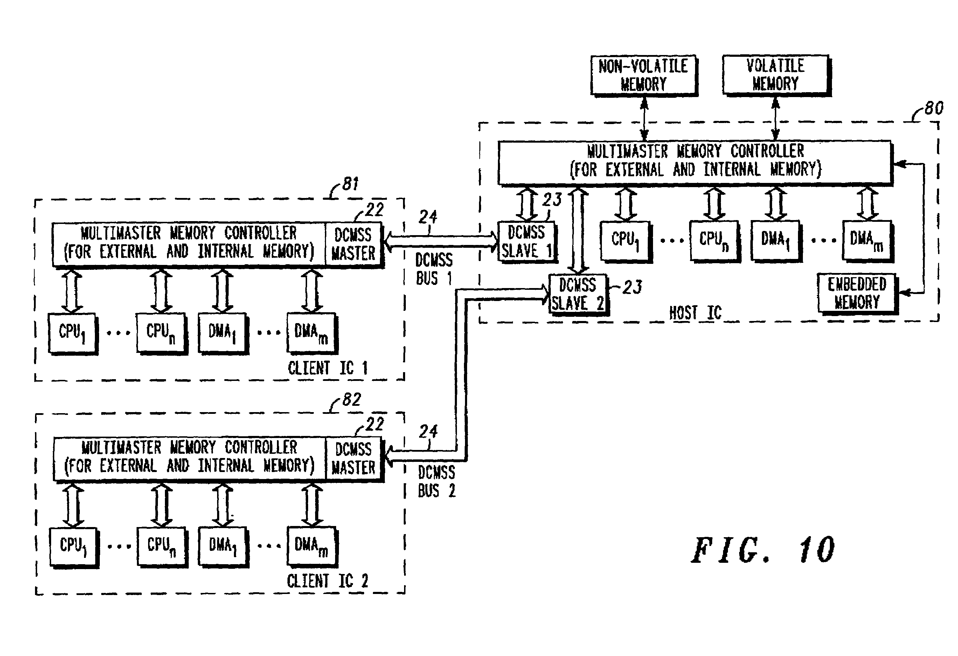

Figure 8 illustrates a first alternative memory sharing configuration, a Daisy-Chaining configuration. A first IC 70 (Client IC) includes a memory master logic 22 that is coupled via a bus 24 to memory slave logic 23 on a second IC 71 (Host IC for IC 70, Client IC for IC 72). The IC 71 includes a memory master logic 22 that is coupled via a bus 24 to a memory slave logic 23 on a third IC 72 (Host IC for IC 71). The IC 72 is coupled to external memory chips 17, 18 and/or embedded memory 20. Memory accesses to and from the external memory chips 17, 18 and/or embedded memory 20 can be performed for the first IC 70 and second IC 71 via the slave memory logic 23 on the third IC 72, utilizing the method described above.

Figure 9 illustrates a second alternative memory sharing configuration, a Star-Network configuration. In this configuration an IC 80 (Host IC for both, IC 81 and IC82) is coupled to external memory chips 17, 18 and/or embedded memories 20. The IC 80 includes two slave memory logic 23 coupled to a first masters memory logic 22 on IC 81 (Client IC 1) and a second master memory logic on IC 82 (Client IC 2), thereby allowing memory access to be granted to the IC 81 and IC 82 via IC 80 utilizing the method described above.

## Claims

1. A memory system for an electronic device comprising a first semiconductor chip having a first circuit; a second semiconductor chip having a second circuit, the second circuit having a controller, wherein the controller is arranged to control access to a memory chip or embedded memory within the second circuit for both the first circuit and the second circuit based upon received memory access requests from the first circuit and the second circuit.

2. A memory system for an electronic device according to claim 1, wherein the first circuit incorporates a memory interface coupled to the second circuit via a bus, such that memory access requests for the first circuit can be communicated to the second circuit via the bus.

3. A memory system for an electronic device according to claim 1 or 2, wherein the bus is a parallel bus.

4. A memory system for an electronic device according to any preceding claim, wherein the controller includes first means for determining the sequence of accesses to the memory chip based upon the received memory access requests and second means for controlling the access to the memory chip bases upon the determined sequence of received memory access requests.

5. A memory system for an electronic device according to any preceding claim, wherein the controller is arranged to interleave memory accesses to the memory chip or embedded memory.

6. A memory system for an electronic device according to any preceding claim, wherein the memory chip is a non-volatile memory chip.

7. A memory system for an electronic device according to any preceding claim, wherein the memory chip is a volatile memory chip.

8. A memory system for an electronic device according to any preceding claim, wherein the first circuit is a modem circuit.

9. A memory system for an electronic device according to any preceding claim, wherein the second circuit is an application processor circuit.

10. A memory system for an electronic device according to any preceding claim, wherein the controller of the second circuit is arranged to control the memory bandwidth for the first circuit by means of a weighted access arbitration scheme.

11. A memory system for an electronic device according to any preceding claim, wherein the first circuit is arranged to provide a clock signal to the second circuit when the second circuit is in a low power mode in order to keep all modules within the second circuit active that are required to perform the memory access requests of the first circuit.

12. A memory system for an electronic device according to any preceding claim, further comprising a third semiconductor chip having a third circuit, wherein the controller is arranged to control access to a memory chip or embedded memory within the second circuit for the first circuit, the second circuit and the third circuit based upon received memory access requests for the first circuit, the second circuit and the third circuit.

13. A memory system for an electronic device according to claim 12, wherein the first circuit, the second circuit and the third circuit are arranged to form a daisy chain arrangement.

14. A memory system for an electronic device according to claim 12, wherein the first circuit, the second circuit and the third circuit are arranged to form a star network arrangement.

15. A radiotelephone comprising a memory system according to any preceding claim.

16. A method for accessing a memory chip on a radiotelephone comprising receiving a first memory access request from a first circuit on a first semiconductor chip and a second memory access request from a second circuit on a second semiconductor chip by a controller that forms part of the second circuit; controlling access to a memory chip based upon the received first memory access request and the second memory access request.
